# DEMANDE DE BREVET EUROPEEN

(11) **EP 1 026 073 A1**
(43) Date de publication de la demande: **09.08.2000**
(21) Numéro de dépôt: 00390005.7
(22) Date de dépôt: 07.02.2000
(51) Int. Cl.: B62K 25/28, B62K 19/22

(54) **Vehicule avec suspension arriere a bras oscillant**

(30) Priorité: 05.02.1999 FR 9901345
(71) Demandeur: Fournales, Jean-Pierre, 81000 Albi (FR)
(72) Inventeur: Fournales, Jean-Pierre, 81000 Albi (FR)
(74) Mandataire: Ravina, Bernard

(57) **Abrégé**

Le véhicule à roues comporte un châssis (1) et une roue motrice (13) dont l'axe moyeu est porté par un bras oscillant (14) et dont le couple moteur est transmis à la roue motrice (13) par une transmission par chaîne (11) et pignons dont un est menant (10) et reçoit le couple moteur à transmettre et l'autre (12) est mené et est accouplé à la roue motrice (13) du véhicule. La chaîne (11) entre les deux pignons forme deux brins dont un est en traction (le brin supérieur) et transmet le couple moteur entre le pignon menant et le pignon mené. Le bras oscillant (14) est solidarisé par un système articulé (15) au châssis (1) et le centre instantané de rotation du bras oscillant (14), déterminé par ledit système articulé (15), est situé dans le prolongement linéaire du brin de traction de la chaîne, ou à proximité immédiate de ce dernier.

## Description

La présente invention a pour objet un véhicule du type à deux roues, dont l'axe moyeu de la roue motrice est porté par un bras oscillant et dont le couple moteur est transmis à la roue motrice par chaîne et pignons, ce véhicule pouvant être une bicyclette, une motocyclette, un vélomoteur, etc.

Une configuration du bras oscillant se retrouve notamment sur des bicyclettes tous terrains, connues sous le terme de V.T.T (" cross country ", "free ride ", descente, slalom).Quel que soit le genre de bicyclette, le mouvement de pivotement du bras oscillant est amorti par un combiné suspension amortisseur ou un élément élastique interposé entre ledit bras oscillant et le châssis. Ce châssis porte en partie supérieure la colonne de direction et en partie inférieure le boîtier de pédalier. Le bras oscillant par son extrémité avant est solidarisé au châssis par un axe d'articulation perpendiculaire au plan du châssis. Une configuration analogue se retrouve aussi sur des motocyclettes, elle peut se retrouver aussi sur des vélomoteurs et autres engins à deux roues ou plus.

Pour ce type de véhicule se pose le problème du " pompage ", ce" pompage " étant un mouvement alternatif vertical engendré par l'effort de pédalage. En effet, sous l'action de la traction de la chaîne, le combiné suspension amortisseur se trouve sollicité en compression ou en traction suivant la position du centre instantané de rotation du bras oscillant par rapport à la direction du brin supérieur de la chaîne. Ce mouvement parasite constitue une perte d'énergie de pédalage qui diminue de façon significative son efficacité d'utilisation.

La présente invention a pour objet de résoudre le problème précédemment évoqué en mettant en oeuvre une nouvelle configuration de solidarisation du bras oscillant au châssis du véhicule, permettant d'éviter ou de réduire fortement le mouvement de pompage induit par l'action de pédalage.

À cet effet, le véhicule à roues selon l'invention, dont l'axe moyeu de la roue motrice est porté par un bras oscillant et dont le couple moteur est transmis à la roue motrice par une transmission par chaîne et pignons dont un est menant et reçoit le couple moteur à transmettre et l'autre est mené et est accouplé à la roue motrice du véhicule, la chaîne entre les deux pignons formant deux brins dont un est en traction et transmet le couple moteur entre le pignon menant et le pignon mené.

Le véhicule tel que défini se caractérise essentiellement en ce que le bras oscillant est solidarisé au châssis par l'intermédiaire d'un système articulé et que le centre instantané de rotation du bras oscillant, déterminé par ledit système articulé, est situé dans le prolongement linéaire du brin de traction de la chaîne ou à proximité immédiate de ce dernier afin que le moment de l'effort de traction du brin de traction de la chaîne par rapport à ce centre instantané de rotation du bras oscillant soit nul ou très faible ce qui annule ou minimise l'effet de pompage.

Le moment de l'effort de traction du brin de traction de la chaîne par rapport au centre instantané de rotation du bras oscillant étant nul ou quasiment nul, on conçoit donc que la suspension n'est plus sollicitée par l'effort de pédalage, le travail de la suspension est donc indépendant de ce dernier.

Lorsque le véhicule, est chargé du poids de son utilisateur et ne reçoit aucune sollicitation mécanique verticale de la part de ce dernier, ni de sollicitations dues à des obstacles sur la route, le bras oscillant occupe une position intermédiaire statique nominale entre une position extrême supérieure ou position butée détente, et une position extrême inférieure ou position butée compression. La position extrême supérieure correspond à l'état non chargé du véhicule, la position extrême inférieure correspond à l'enfoncement maximal du combiné suspension amortisseur. Les deux positions extrêmes, butée détente et butée compression, sont déterminées par les caractéristiques géométriques du combiné suspension amortisseur.

Pour une bicyclette de descente, la positon intermédiaire statique nominale correspond au tiers de l'enfoncement global de la course de la suspension arrière. Pour une bicyclette de cross-country, la position statique nominale correspond entre 1/8 et 1/10 ème de l'enfoncement global de la course de la suspension arrière.

Pour des bicyclettes de descente pour lesquelles le débattement de l'axe de la roue arrière entre les deux positions extrêmes est important, le lieu géométrique des centres instantanés de rotation déterminés par ces deux positions extrêmes ainsi que par toutes les positions intermédiaires autres que la position intermédiaire nominale se situe à proximité immédiate du prolongement linéaire du brin de traction de la chaîne. Pour des bicyclettes dites de cross-country pour lesquelles le débattement de l'axe de la roue arrière est faible (de l'ordre de 60 mm) le lieu géométriques des centres instantanés de rotation se situera dans le prolongement du brin supérieur de la chaîne.

Selon une autre caractéristique de l'invention, le lieu géométrique des centres instantanés de rotation se situe en avant du système articulé ce qui augmente la longueur virtuelle du bras oscillant. Cette caractéristique est utilisable principalement sur des bicyclettes de descente.
Ainsi la trajectoire, par rapport au châssis, de l'axe de rotation de la roue motrice, lorsque le bras oscillant est déplacé entre ces deux positions extrêmes, est quasi linéaire.

Préférentiellement, selon une autre caractéristique de l'invention, toujours pour des bicyclettes de descente, cette trajectoire, depuis la position extrême supérieure du bras oscillant, est inclinée vers l'arrière et vers le haut de façon que l'empattement du véhicule augmente légèrement pendant l'enfoncement du bras oscillant. Cette caractéristique améliore les qualités de stabilité et de franchissement du véhicule.

Selon une autre caractéristique de l'invention, le lieu géométrique des centres instantanés de rotation est au-dessus du plan géométrique contenant l'axe géométrique de rotation de la roue motrice et l'axe géométrique de rotation du pignon menant.

Cette disposition favorise aussi l'absorption des impacts frontaux sur la roue motrice.

Selon une autre caractéristique de l'invention, le système articulé est constitué de deux basculeurs d'inégales longueurs, articulés d'une part au châssis et d'autre part au bras oscillant, et définissant avec ledit bras oscillant et ledit châssis un quadrilatère déformable à côtés inégaux, grâce auquel, lorsque le véhicule est chargé du poids de l'utilisateur dans le cas d'une bicyclette de descente, le centre instantané de rotation du bras oscillant se situe dans le prolongement linéaire du brin de traction de la chaîne ou à proximité immédiate de ce dernier.

Selon encore une autre caractéristique de l'invention, le châssis est un châssis poutre constitué par un élément tubulaire rectiligne de section droite constante, circulaire ou autres formes par exemple polygonale, lenticulaire etc.

Selon une autre caractéristique de l'invention, les basculeurs du système articulé sont solidarisés au châssis par l'intermédiaire de pièces support et ces pièces support sont fixées par collage au châssis.

D'autres avantages et caractéristiques de l'invention apparaîtront à la lecture de la description d'une forme préférée de réalisation, donnée à titre d'exemple non limitatif en se référant aux dessins annexés en lesquels:
- la figure 1 est une vue de côté d'une bicyclette selon l'invention, cette bicyclette pouvant être utilisée pour la descente,
- la figure 2 est une vue de côté d'une bicyclette selon une autre forme de réalisation de l'invention, cette bicyclette pouvant être utilisée pour la descente,
- la figure 3 est une vue de côté d'une bicyclette selon une autre forme de réalisation, cette bicyclette pouvant être utilisée pour le cross-country,

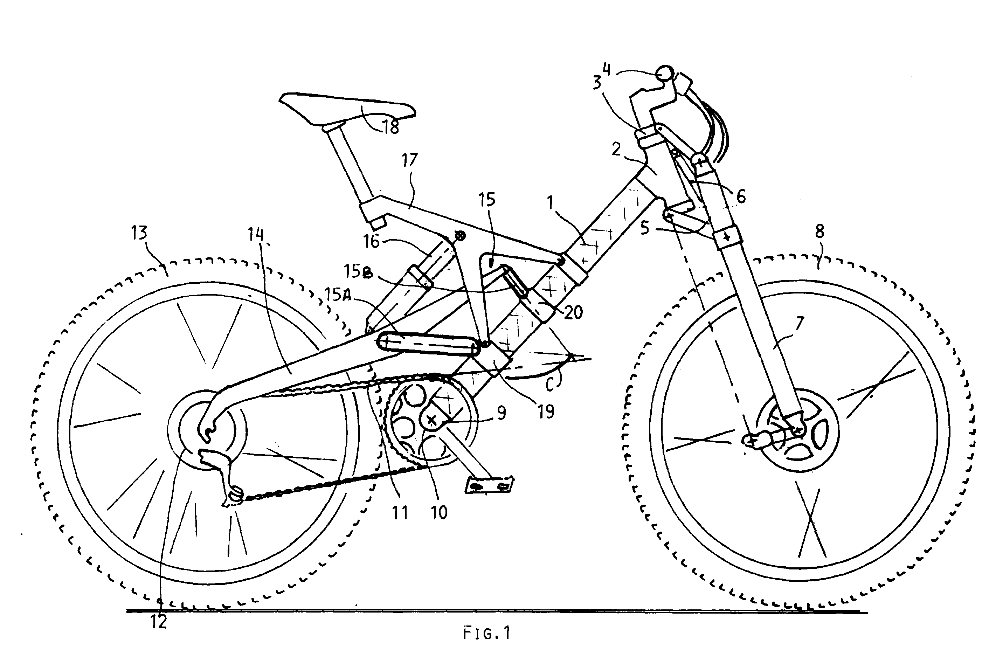

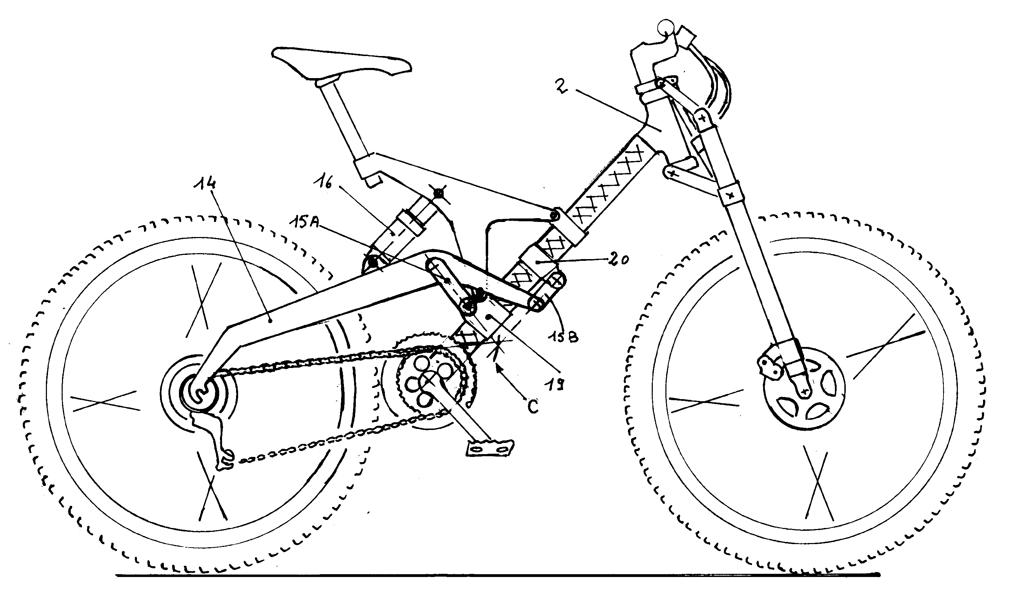

En figures 1, 2 et 3 sont représentées des bicyclettes mais il va de soi que la présente invention est applicable à des motocyclettes, à des vélomoteurs et autres engins.

Typiquement la bicyclette selon l'invention, comprend un châssis par exemple constitué par un châssis poutre 1 comportant en partie supérieure une colonne de direction 2 dans laquelle s'engage un arbre pivot de direction 3 recevant en fixation un guidon de direction 4. À cet arbre pivot 3 est solidarisée, par l'intermédiaire par exemple d'une structure déformable 5 avec combiné suspension amortisseur 6, la fourche avant 7. Cette fourche reçoit la roue avant 8 de la bicyclette.

En partie inférieure, le châssis 1 reçoit en fixation le boîtier 9 du pédalier. Dans ce boîtier de pédalier s'engage l'axe du pédalier auquel est fixé un pignon denté menant 10, tel un plateau denté, accouplé par une chaîne 11à un pignon arrière mené 12, accouplé à l'axe moyeu de la roue motrice 13 en l'occurrence la roue arrière. Cet axe est fixé en extrémité arrière d'un bras oscillant 14 solidarisé par un système articulé 15, au châssis 1. La bicyclette peut être équipée sur l'axe du pédalier d'un ou plusieurs plateaux. Ainsi pour une bicyclette de descente n'est prévu généralement qu'un seul plateau tandis que pour une bicyclette de cross-country sont prévus plusieurs plateaux de différents diamètres (généralement trois). Comme l'effort de traction exercé sur la chaîne est maximal lorsque le petit plateau est utilisé, le système articulé 15 est conçu en sorte que la caractéristique essentielle de l'invention c'est à dire le centre instantané de rotation dans l'alignement du brin supérieur de la chaîne, s'applique lorsque ce petit plateau est utilisé mais le système articulé peut être conçu pour que cette caractéristique puisse s'appliquer au plateau intermédiaire ou à l'un des plateaux intermédiaires ou au grand plateau.

A l'axe du pédalier sont fixées de manière connue deux manivelles équipées de pédales sur lesquelles l'utilisateur applique un couple moteur. La chaîne assure la transmission du couple moteur entre le pignon avant en l'occurrence le plateau et le pignon arrière. Entre ces deux pignons, la chaîne présente un brin de traction et un brin de retour. Le brin de traction transmet le couple moteur entre le pédalier avant et le pignon arrière, ce brin de traction étant le brin supérieur de la chaîne. Le brin de retour est le brin inférieur, ce dernier peut former une légère boucle s'il n'est pas mis en tension par un dérailleur.

Un combiné suspension amortisseur ou un élément élastique 16 est fixé d'une part au bras oscillant 14 et d'autre part soit à un faux châssis 17 lui-même fixé au châssis poutre 1, soit à une excroissance du châssis 1. Ce faux châssis ou cette excroissance est équipé d'une selle 18.

Le système articulé 15 permet le mouvement de pivotement du bras oscillant 14 selon un axe géométrique parallèle à l'axe géométrique de rotation de la roue motrice 13. Grâce à ce système articulé, le centre instantané de rotation du bras oscillant, lorsque ce dernier occupe la position intermédiaire nominale, se situe sur le prolongement linéaire du brin supérieur de la chaîne., le lieu géométrique des centres instantanés de rotation des différentes positions intermédiaires du bras oscillant comprises entre les positions extrêmes compression et extension du bras oscillant, est représenté sur les figures par la courbe C. Quel que soit le type de bicyclette le lieu géométrique des centres instantanés de rotation se situe en avant d'une perpendiculaire au sol passant par l'axe géométrique de rotation du pignon menant 10. De même quel que soit le type de bicyclette le lieu géométrique des centres instantanés de rotation est au-dessus du plan géométrique contenant l'axe géométrique de rotation de la roue motrice et l'axe géométrique de rotation du pignon menant.

Le système articulé 15 est constitué avantageusement par un basculeur principal 15a articulé d'une part au bras oscillant 14 et d'autre part à une pièce support 19, fixée au châssis poutre 1 et par un basculeur secondaire 15b, de plus faible longueur que le précédent, articulé d'une part au bras oscillant 14 et d'autre part à une seconde pièce support 20, fixée au châssis poutre 1.
Chaque pièce support 19 et 20 est constituée par un collier.

Les axes géométriques d'articulation de chaque basculeur sont parallèles à l'axe géométrique de rotation de la roue motrice 13.

Comme on peut le voir sur les figures jointes, les basculeurs, principal 15a et secondaire 15b, se présentent sous la forme d'une biellette rectiligne. Ces deux basculeurs sont obliques l'un par rapport à l'autre et leurs axes géométriques longitudinaux sont sécants, le centre instantané de rotation du bras oscillant étant le point d'intersection de ces deux axes. Par axe géométrique longitudinal on entend l'axe géométrique passant par le centre des deux articulations du basculeur.

Il y a lieu de noter que pour une bicyclette de descente, les basculeurs 15a et 15b se développent tous deux en arrière du châssis poutre en considérant le sens d'avance du véhicule.
Toujours pour ce type de bicyclette, le lieu géométrique des centres instantanés de rotation se situe en avant du système articulé ce qui augmente la longueur virtuelle du bras oscillant. De part cette disposition, la trajectoire, par rapport au châssis, de l'axe de rotation de la roue motrice, lorsque le bras oscillant est déplacé entre ces deux positions extrêmes, est quasi linéaire. Cette trajectoire, depuis la position extrême supérieure du bras oscillant, est avantageusement inclinée vers l'arrière et vers le haut de façon que l'empattement du véhicule augmente légèrement pendant l'enfoncement du bras oscillant. Cette caractéristique améliore les qualités de stabilité et de franchissement du véhicule.

Pour une bicyclette de cross-country, la trajectoire de l'axe de la roue arrière lorsque le bras oscillant évolue en basculement entre les deux positions extrêmes, est proche d'un arc de circonférence de cercle centré sur l'axe de rotation du pédalier avant. Une telle disposition en minimisant les variations de longueur du brin supérieur de la chaîne, permet de minimiser les variations de tension dans cette dernière lorsque le bras oscillant évolue entre les deux positions extrêmes. On peut remarquer que pour une bicyclette de cross-country la trajectoire décrite par le centre instantané de rotation se situe sous le système basculant.

Selon la forme préférée de réalisation d'une bicyclette de cross-country, l'un des basculeurs est situé en avant du châssis poutre tandis que l'autre en arrière. De préférence le basculeur supérieur 15b ou basculeur secondaire est situé en avant et le basculeur inférieur 15a, ou basculeur principal est situé en arrière. On peut voir que par rapport à un axe géométrique normal et sécant à l'axe de rotation de l'axe du pédalier et passant par le centre de la douille de direction, le basculeur principal occupe une position perpendiculaire à cet axe géométrique ou proche d'une perpendiculaire à cet axe tandis que le basculeur secondaire occupe une position parallèle à cet axe géométrique ou une position proche d'une parallèle à cet axe. Par position proche d'une perpendiculaire il faut entendre une position faiblement inclinée par rapport à cette dernière, de même par position proche d'une parallèle il faut entendre une position faiblement inclinée par rapport à cette dernière.

Avec une telle configuration, le bras oscillant, présente en avant une forme de fourche par laquelle il est positionné de part et d'autre du châssis poutre et vient par l'extrémité des branches de la fourche, s'articuler au basculeur supérieur.

Pour simplifier la réalisation de la bicyclette, le châssis poutre 1 est constitué par un élément tubulaire rectiligne de section droite constante, en fibre de carbone par exemple. À titre d'exemple, le châssis poutre présente une section droite de forme circulaire, de forme polygonale par exemple rectangulaire, carrée, ou bien une section droite de forme lenticulaire.

Les colliers 19 et 20, le moyeu 9 du pédalier et la colonne de direction seront avantageusement collés sur le châssis poutre. Ce mode de réalisation permet d'associer entre eux, mécaniquement par collage, des matériaux de natures différentes ce qui présente un intérêt économique par réduction des prix de revient et par simplification de la fabrication.

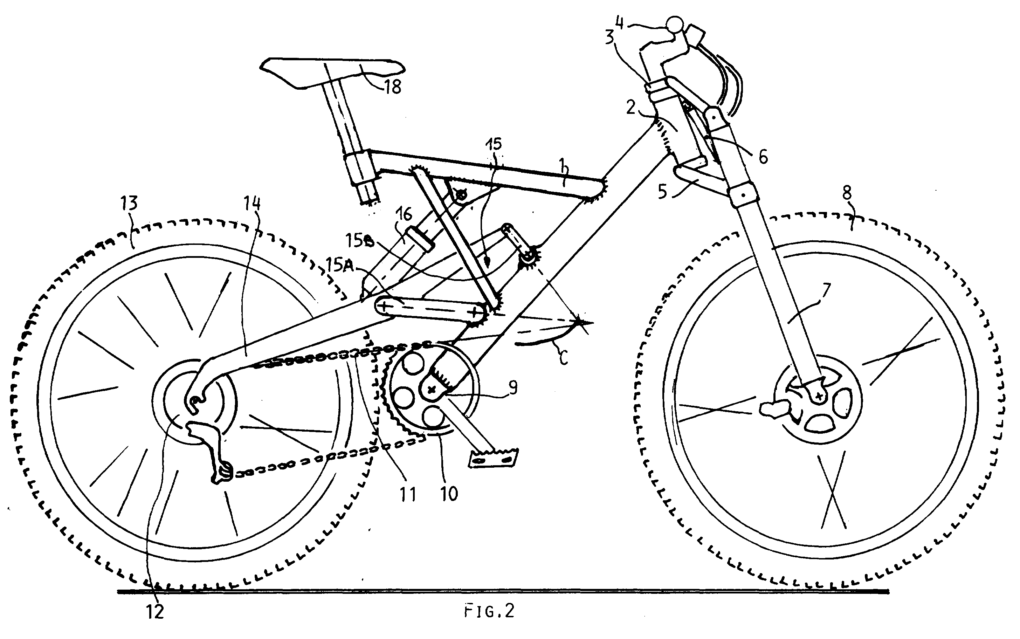

Selon une autre forme de réalisation, telle que représentée en figure 2, le châssis 1 est réalisé avec des techniques classiques et connues de fabrication: tubes mécanosoudés, châssis monobloc en fibre de carbone etc. Dans ce cas de réalisation, la position relative des points d'articulation, du système articulé 15 par rapport à la colonne de direction et au boîtier de pédalier peut être différente tout en conservant les caractéristiques principales à savoir: centre instantané de rotation dans l'alignement du brin de traction de la chaîne le plus en avant possible.

Enfin le bras oscillant sera constitué de deux parties assemblées rigidement l'une à l'autre, à savoir une partie arrière format fourche et recevant en fixation l'axe moyeu de la roue arrière et l'articulation du basculeur principal 15a et une partie avant rectiligne, recevant en articulation le basculeur secondaire 15b. A cette seconde partie pourra être articulée l'extrémité inférieure du combiné suspension amortisseur 16 lequel est articulé par son extrémité supérieure au châssis 1 ou au faux châssis 17. Dans le cas d'une réalisation d'un bras oscillant monobloc l'extrémité inférieure sera fixée sur celui-ci.

Il est évident que les enseignements de la présente invention s'appliquent à tous types de véhicules à deux ou plusieurs roues dont l'axe moyeu de la ou des roues motrices est monté sur un bras oscillant associé à un combiné suspension amortisseur et dont le couple moteur est transmis à la ou aux roue(s) motrice(s) par chaîne et pignons.

Il va de soi que la présente invention peut recevoir tous aménagements et variantes du domaine des équivalents techniques sans pour autant sortir du cadre du présent brevet.

## Revendications

1. Véhicule à roues comportant un châssis (1) et notamment une roue motrice (13) dont l'axe moyeu est porté par un bras oscillant (14) susceptible d'osciller entre deux positions angulaires extrêmes et dont le couple moteur est transmis à la roue motrice (13) par une transmission par chaîne et pignons dont un est menant (10) et reçoit le couple moteur à transmettre et l'autre (12) est mené et est accouplé à la roue motrice (13) du véhicule, la chaîne (11) entre les deux pignons (10), (12) formant deux brins dont un est en traction et transmet le couple moteur entre le pignon menant et le pignon mené caractérisé en ce que le bras oscillant (14) est solidarisé par l'intermédiaire d'un système articulé (15) au châssis (1) et que le centre instantané de rotation du bras oscillant (14), déterminé par ledit système articulé (15), est situé dans le prolongement linéaire du brin de traction de la chaîne (11), ou à proximité immédiate de ce dernier.

2. Véhicule à roues selon la revendication 1, caractérisé en ce que le système articulé est constitué par deux basculeurs (15a) et (15b), articulés d'une part au châssis (1) et d'autre part au bras oscillant (14), lesdits basculeurs définissant avec ledit bras (14) et ledit châssis (1) un quadrilatère déformable à côtés inégaux.

3. Véhicule à roues selon l'une quelconque des revendications précédentes, caractérisé en ce que le lieu géométrique des centres instantanés de rotation se situe en avant d'une perpendiculaire au sol passant par l'axe géométrique de rotation du pignon menant (10).

4. Véhicule à mues selon l'une quelconque des revendications précédentes, caractérisé en ce que le lieu géométrique des centres instantanés de rotation se situe au-dessus d'un plan géométrique contenant l'axe géométrique de rotation de la roue motrice (13) et l'axe géométrique de rotation du pignon menant (10).

5. Véhicule à roues selon l'une quelconque des revendications précédentes, caractérisé en ce que lorsque le véhicule est chargé du poids de l'utilisateur et que le bras oscillant (14), sous l'effet de ce poids est disposé selon une position intermédiaire nominale, le centre instantané de rotation est situé sur le prolongement linéaire du brin de traction de la chaîne (11).

6. Véhicule à roues, tel une bicyclette de descente, selon la revendication précédente, caractérisé en ce que le lieu géométrique des centres instantanés de rotation est situé en avant du système articulé (15) ce qui augmente la longueur virtuelle du bras oscillant grâce à quoi la trajectoire par rapport au châssis, de l'axe de rotation de la roue motrice (13) lorsque le bras oscillant (14) est déplacé entre les deux positions angulaires extrêmes est quasi linéaire.

7. Véhicule à roues, tel une bicyclette de descente, selon la revendication 6, caractérisé en ce que la trajectoire, par rapport au châssis, de l'axe de rotation de la roue motrice (13) lorsque le bras oscillant (14) est déplacé entre les deux positions angulaires extrêmes, est inclinée vers l'arrière et le haut depuis la position extrême supérieure du bras (14), de façon que l'empattement du véhicule augmente légèrement pendant l'enfoncement du bras oscillant.

8. Véhicule à roues, tel une bicyclette de descente, selon l'une quelconque des revendications 6 ou 7, caractérisé en ce que les basculeurs (15a), (15b) du système articulé sont disposés en anière du châssis poutre en considérant le sens d'avance du véhicule.

9. Véhicule à roues, tel une bicyclette de cross-country, selon l'une quelconque des revendications 1 à 5, caractérisé en ce que la trajectoire de l'axe de la roue arrière, lorsque le bras oscillant évolue en basculement entre les deux positions extrêmes, est proche d'un arc de circonférence de cercle centré sur l'axe de rotation du pédalier avant de façon que la variation de la longueur du brin supérieur de la chaîne soit très faible.

10. Véhicule à roues, tel une bicyclette de cross-country, selon la revendication 9, caractérisé en ce que l'un des basculeurs est situé en avant du châssis poutre tandis que l'autre est en arrière.

11. Véhicule à roues, tel une bicyclette de cross-country, selon la revendication 10, caractérisé en ce que le basculeur secondaire est situé en avant du châssis poutre et le basculeur principal en arrière.

12. Véhicule à roues selon l'une quelconque des revendication précédentes, caractérisé en ce que le châssis (1) est un châssis poutre constitué par un élément tubulaire rectiligne de section droite constante.

13. Véhicule à roues selon l'une quelconque des revendications précédentes, caractérisé en ce que les basculeurs (15a), (15b) du système articulé (15) sont solidarisés au châssis par l'intermédiaire de pièces support (19), (20) et que ces pièces support sont fixées par collage audit châssis (1).
